# EUROPÄISCHE PATENTSCHRIFT

(11) **EP 0 904 534 B1**
(45) Veröffentlichungstag und Bekanntmachung des Hinweises auf die Patenterteilung: **26.11.2003**
(21) Anmeldenummer: 97928193.8
(22) Anmeldetag: 12.06.1997
(51) Int. Cl.: G01N 27/407

(54) **FESTELEKTROLYT-GASSENSOR**
SOLID ELECTROLYTE GAS SENSOR
DETECTEUR DE GAZ A ELECTROLYTE SOLIDE

(30) Priorität: 12.06.1996 DE 19623487
(43) Veröffentlichungstag der Anmeldung: 31.03.1999
(73) Patentinhaber: Max-Planck-Gesellschaft zur Förderung der Wissenschaften e.V., 80539 München (DE)
(72) Erfinder: NÄFE, Helfried, D-70563 Stuttgart (DE); ALDINGER, Fritz, D-70771 Leinfelden-Echterdingen (DE)
(74) Vertreter: Weiss, Wolfgang, Dipl.-Chem. Dr.
(86) Internationale Anmeldenummer: EP9703081
(87) Internationale Veröffentlichungsnummer: WO97047964

(56) Entgegenhaltungen:
- EP-A- 0 182 921
- EP-A- 0 468 249
- EP-A- 0 604 243
- WO-A-94/28403
- Y. YAN ET ALL: "Construction and working mechanism of Sulfur Dioxide Sensor utilizing stabilized zirconia and metal sulfate " J. ELECTROCHEM. SOC., Bd. 143, Nr. 1, Februar 1996, Seiten 609-613, XP002041277 in der Anmeldung erwähnt
- H. NÄFE: "Conclusions on the electronic conductivity of Na-bèta-alumina from the behaviour of a potentiometric CO2 sensor comprising Na-bèta-alumina as electrolyte " SOLID STATE IONICS, Bd. 68, 1994, Seiten 249-255, XP002041278 in der Anmeldung erwähnt
- T. MARUYAMA ET AL: "Potentiometric gas sensor for carbon dioxide using solid electrolytes" SOLID STATE IONICS, Bd. 23, 1987, Seiten 107-112, XP002041279 in der Anmeldung erwähnt

## Beschreibung

Die Erfindung betrifft eine galvanische Zelle, die vorzugsweise als potentiometrischer Sensor zur Bestimmung von Gasen wie etwa CO₂, SOₓ und NOₓ ausgestaltet ist. Die erfindungsgemäße galvanische Zelle kann bei erhöhten Temperaturen betrieben werden und ist insbesondere für solche Anwendungsbedingungen geeignet, bei denen sich mit dem Gehalt der nachzuweisenden Gase zugleich der Partialdruck des Sauerstoffs im Meßmedium ändert.

Die Verwendung von sauerstoffionenleitenden Festelektrolyten zum potentiometrischen Nachweis von gasförmigen Anhydriden der Formel XOₓ (X = C, S, N) geht auf Veröffentlichungen von Yamazoe und Mitarbeitern zurück, die das Meßprinzip zunächst zur Bestimmung von SOₓ (Yan et al., Chem.Lett. (1992), 635; Yan et al., Sensors and Actuators B. 12 (1993), 77; Yan et al., Sensors and Actuators B. 20 (1994), 81), später auch zum Nachweis von NOₓ (Kurosawa et al., Solid State Ionics 79 (1995), 338; Miura et al., J.Electrochem.Soc. 143 (1996), L33) und CO₂ (Miura et al., Sensors and Actuators B., 24-25 (1995), 260) nutzten.

Grundlage des Meßprinzips bei diesen galvanischen Zellen ist die Anordnung:
Pt/Au, O₂, XOₓ/Meₘ(XOₙ)ₚ/stabilisiertes ZrO₂/O₂, (XOₓ), Pt
wobei Me ein Metall, beispielsweise Li, Na oder K ist und das stabilisierte ZrO₂ als sauerstoffionenleitender Festelektrolyt (O-FE) dient. Der O-FE ist auf einer Seite mit einer Platinierung und auf der Gegenseite mit einer gassensitiven Schicht des Salzes Meₘ(XOₙ)ₚ oder in speziellen Ausführungsformen mit einer Mischung verschiedener Salze des nachzuweisenden gasförmigen Anhydrids versehen. Das so präparierte ZrO₂-Pellet hat auf beiden Elektrodenseiten Kontakt mit dem O₂ und XOₓ enthaltenden Meßgas.

Gemäß Miura et al., Supra, basiert die Funktion der Meßelektrode auf dem Vorhandensein einer sogenannten ionischen Brükke. Diese ionische Brücke, die eine elektrochemische Verbindung zwischen dem Metallsalz und dem O-FE bewirkt, entsteht durch Ausbildung einer Festphase, die sowohl Me- als auch Sauerstoffionen enthalten soll.

Ein Nachteil der von der Arbeitsgruppe Yamazoe vorgeschlagenen Sensoren besteht darin, daß die reproduzierbare Herstellung arbeitsfähiger, d.h. auf die Konzentration des nachzuweisenden Gases ansprechender Sensoren nicht immer gelingt (vgl. Yan et al., J.Electrochem.Soc. 143 (1996), 609). Offensichtlich stellt der erfolgreiche Betrieb eines solchen Sensors eine auf zufällige Konstellationen zurückzuführende Ausnahme dar. Eigene Untersuchungen haben gezeigt, daß die Bildung der als ionische Brücke vermeintlicherweise fungierenden Phase aus kinetischen Gründen eher unwahrscheinlich ist und daß die in den Yamazoe-Sensoren verwendeten Elektroden überhaupt nicht auf CO₂-Partialdruckänderungen ansprechen.

Bereits vor den Veröffentlichungen von Yamazoe und Mitarbeitern war die Verwendung eines O-FE im Zusammenhang mit dem potentiometrischen Nachweis von Gasen bekannt. So haben Kleitz et al., New Types of Solid-Electrolyte Gas Sensors, in: P. Vashishta, J.N. Mundy, G.K. Shenoy (Hrsg.), Fast Ion Transport in Solids, Elsevier North Holland Inc., New York 1979, 69) sowie Belanger et al. (J.Electrochem.Soc. 131 (1984), 579) erstmals darauf hingewiesen, welchen Vorteil der direkte Kontakt zwischen einem O-FE und einem dem nachzuweisenden gasförmigen Anhydrid entsprechenden Salz, im konkreten Fall einem Sulfat bzw. einem Carbonat für die Bestimmung von SOₓ bzw. CO₂ in Hinsicht auf die Eliminierung des Sauerstoffpartialdrucks mit sich bringt. In diesen Sensorvarianten erfüllte der O-FE jedoch nur die Funktion eines Hilfsmittels. Das auf den Gehalt des zu bestimmenden Gases im Meßmedium ansprechende Signal des Sensors fällt ausschließlich an dem als Metallionenleiter (Me-FE) wirkenden Salz ab. Der O-FE mißt lediglich die Differenz im Sauerstoffpotential zwischen dem Meß- und einem Referenzgas. Durch direkten Kontakt zwischen O-FE und Me-Fe addiert sich die Zellspannung beider Meßzellen und das Bruttosignal wird vom Sauerstoffdruck unabhängig.

Den mit der Bereitstellung eines Referenzgases verbundenen Nachteil umgeht eine später vorgeschlagene Sensorvariante (Maruyama et al., Solid State Ionics 23 (1987), 107 und Saito et al., Solid States Ionics 28-30 (1988), 1644 und DE-OS 41 12 301). Hier braucht der O-FE ausschließlich nur noch von dem Meßgas umströmt zu werden. Dennoch bleibt der Sensor eine Kombination zwischen einer Sauerstoff- und einer Metallionenkonzentrationskette, nur daß beide Elektrolyte in diesem Sensor aufeinandergesintert sind und damit einen sogenannten Zweischichtelektrolyten bilden. Gemäß diesem Meßprinzip muß die elektronische Leitfähigkeit des Metallionenleiters gegenüber der Ionenleitfähigkeit vernachlässigbar klein sein. Hinzu kommt, daß bei diesen Sensortypen, nicht wie bei den Sensoren von Kleitz et al., Supra sowie Belanger et al., Supra, das Salz selbst als Me-FE dient, sondern ein davon unabhängiges Material, das ein vergleichsweise besserer Ionenleiter ist und im Gleichgewicht mit dem Salz Meₘ(XOₙ)ₚ die Meßelektrode bildet.

Ein Nachteil der von Maruyama et al., Supra, und Saito et al., Supra, beschriebenen Sensorvarianten besteht darin, daß sie stets eine Kombination zwischen einer Metallionen- und einer Sauerstoffkonzentrationskette darstellen. Dies ist insbesondere bedeutungsvoll unter dem Aspekt einer nicht zu vernachlässigenden Elektronenleitung im Me-FE (Näfe, Sensors and Actuators B. 21 (1994), 79 und Näfe., Solid State Ionics 68 (1994), 249), die üblicherweise mit einer Beeinträchtigung der Sensormeßeigenschaften einhergeht.

Yan et al., J. Elektrochem. Soc. 143 (1996), 609-613 offenbart einen gattungsbildenden Schwefeldioxid-Sensor, der auf einem Rohr aus stabilisiertem Zirkondioxid zwischen der an der Oberfläche befindlichen Platinelektrode eine dünne Schicht Lithiumsulfat/Magnesiumoxid als gassensitives Material und auf der Rohrinnenseite eine Referenzelektrode aus Platin angeordnet hat, wobei zwischen sich beiden Halbzellen eine Mischoxidschicht aus Lithiumoxid, Zirkoniumoxid und Magnesiumoxid befinden kann.

Die der Erfindung zugrunde liegende Aufgabe ist somit die reproduzierbare Herstellung einer galvanischen Zelle, insbesondere eines potentiometrischen Sensors zum Nachweis von Gasen, auf der Basis ausschließlich einer Sauerstoffkonzentrationskette unter Verwendung eines O-FE, wodurch gewährleistet ist, daß die Meßeigenschaften des Sensors nicht durch Elektronenleitung im Elektrolyten beeinträchtigt sind.

Diese Aufgabe kann dadurch gelöst werden, daß zwischen dem sauerstoffionenleitenden Festelektrolyten und dem als gassensitive Schicht wirkenden Metallsalz Meₘ(XOₙ)ₚ mindestens eine Zwischenschicht eines Materials eingebracht wird, das den potentialbestimmenden Bereich der Festelektrolytenoberfläche gasdicht gegenüber der Umgebung versiegelt und eine hohe Leitfähigkeit sowohl für Metallionen Me als auch für Elektronen aufweist, d.h. die Elektronenleitung soll vorzugsweise unter den Anwendungsbedingungen von der Größenordnung der Ionenleitung oder größer sein. Weiterhin soll sich das Material der Zwischenschicht vorzugsweise unter den Betriebsbedingungen des Sensors inert verhalten, eine endliche Löslichkeit für das Metalloxid Me_{y}O realisieren und eine vernachlässigbar kleine Beweglichkeit für Sauerstoff bzw. das Oxid Me_{y}O aufweisen.

Ein Gegenstand der vorliegenden Erfindung ist somit eine galvanische Zelle umfassend:
(a) einen sauerstoffionenleitenden Festelektrolyten,
(b) ein gassensitives Material, das mindestens ein Salz der Strukturformel Meₘ(XOₙ)ₚ enthält, worin Me ein Metall darstellt, X C, S oder N bedeutet und die Symbole m, n und p die jeweiligen Stöchiometrieverhältnisse charakterisieren,
(c) zwei elektronisch leitende Potentialabgriffe an Oberflächenbereichen des sauerstoffionenleitenden Festelektrolyten, und
(d) ein zwischen dem sauerstoffionenleitenden Festelektrolyten und dem gassensitiven Material angeordnetes Material, welches für Kationen des Metalls Me und für Elektronen leitfähig ist und die mit dem einen Potentialabgriff versehene Oberfläche des Festelektrolyten gasdicht versiegelt.

Der sauerstoffionenleitende Festelektrolyt kann beispielsweise ein Material auf der Basis von ZrO₂, ThO₂, CeO₂, HfO₂ oder Bi₂O₃ sein. Besonders bevorzugt als sauerstoffionenleitender Festelektrolyt ist ein Material auf der Basis von kubischem, tetragonalem oder partiell stabilisiertem ZrO₂, z.B. ein YO_{1,5}stabilisiertes ZrO₂.

Das Salz der Strukturformel Meₘ(XOₙ)ₚ ist vorzugsweise ein Alkalimetall- oder ein Erdalkalimetallsalz, z.B. ein Li-, Na-, K-, Rb-, Cs-, Ca-, Sr- oder Ba-Salz. Das Metallsalz ist nach Maßgabe des zu detektierenden Gases vorzugsweise ein Carbonat, Sulfat oder Nitrat.

Das kationenleitende Material kann ein Alkalimetall- oder Erdalkalimetallionenleiter sein, dessen elektronische Leitfähigkeit gegenüber den üblichen Verhältnissen vorzugsweise gezielt erhöht wurde. Diese Erhöhung der elektronischen Leitfähigkeit kann beispielsweise durch Verwendung eines Kompositmaterials erreicht werden, das ein Gemisch aus einer elektronisch leitenden Phase wie etwa Pt und einer kationenleitenden Phase enthält. Darüberhinaus können auch Materialien verwendet werden, die sowohl ausreichend hohe kationische und elektronische Leitfähigkeit aufweisen.

Beispiele für geeignete Ionenleiter sind die als Na- oder Li-Ionenleiter bekannten Materialien Nasicon und Lisicon, alle Metalloxid-dotierten Beta-Aluminate sowie Gläser wie beispielsweise ein Lithiumsilikatglas (Li₂O:SiO₂=1:2-4). Diese Materialien werden zur Erhöhung der elektronischen Leitfähigkeit vorzugsweise als Kompositmaterial mit einer elektronisch leitenden Phase eingesetzt.

Die erfindungsgemäße galvanische Zelle wird vorzugsweise als Gassensor insbesondere zum Nachweis von CO₂, NOₓ oder SOₓ sowohl im Spurenbereich als auch für größere Konzentrationen eingesetzt. Der Temperaturbereich, in dem der erfindungsgemäße Sensor eingesetzt werden kann, ist üblicherweise 450°C bis 750°C.

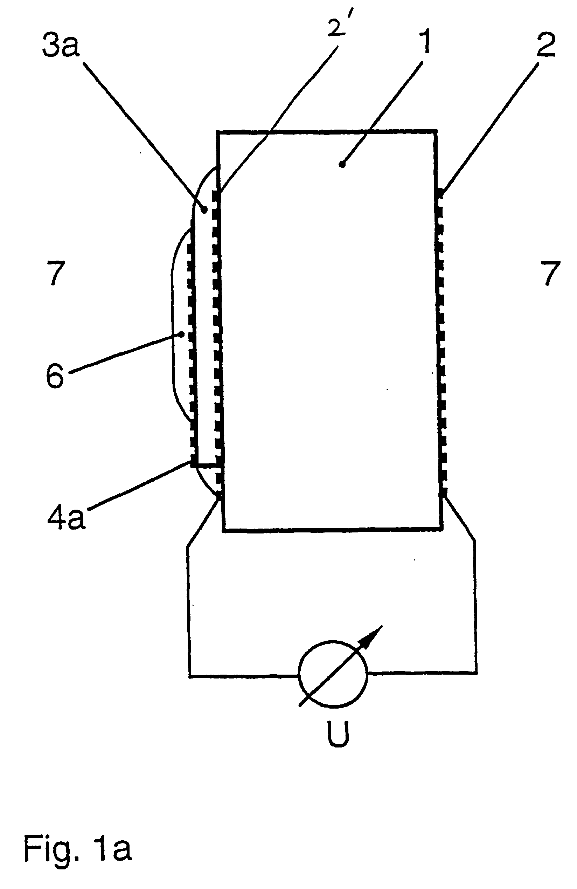

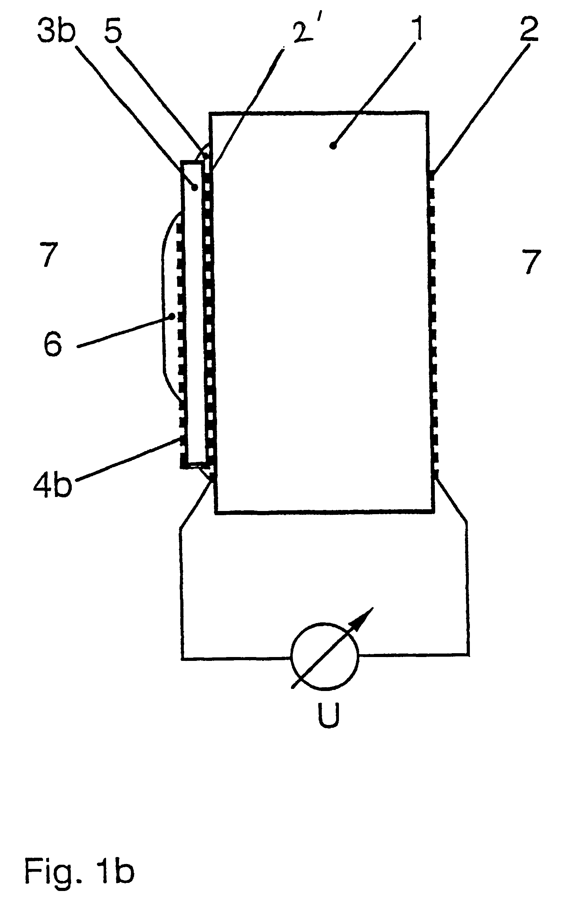

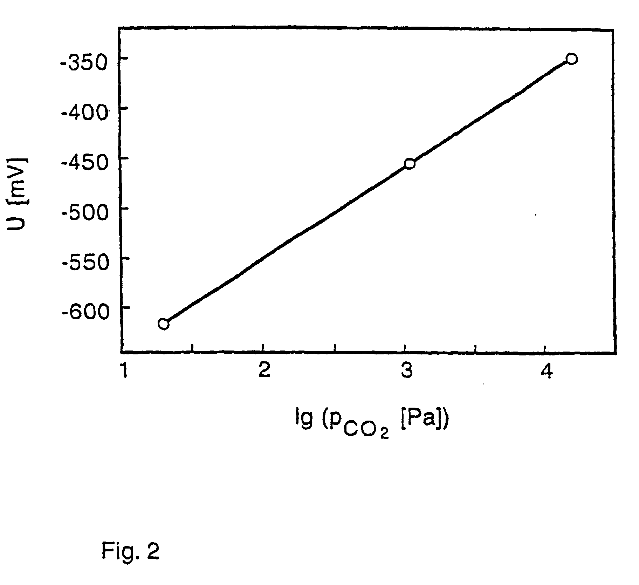

Die Erfindung soll weiterhin im Zusammenhang mit den Figuren 1a, 1b und 2 erläutert werden. Es zeigen:
- Fig. 1a: eine erste Ausführungsform der erfindungsgemäßen galvanischen Zelle,
- Fig. 1b: eine zweite Ausführungsform der erfindungsgemäßen galvanischen Zelle und
- Fig. 2: die Empfindlichkeit der galvanischen Zelle gemäß Fig. 1 auf eine Änderung im Partialdruck des Meßgases.

Der prinzipell e Aufbau einer erfindungsgemäßen Zelle ist in Fig. 1a und Fig. 1b exemplarisch dargestellt. Auf den Festelektrolyten (1), bei dem es sich z.B. um ein Pellet aus YO_{1,5}stabilisiertem ZrO₂ handeln kann, wird auf beiden planparallelen Oberflächen jeweils ein elektronisch leitender Potentialabgriff (2,2') angebracht. Dies kann beispielsweise durch Einbrennen einer handelsüblichen Platinpaste erfolgen.

Bei der in Fig. 1a gezeigten Ausführungsform der erfindungsgemäßen galvanischen Zelle wird auf eine dieser Oberflächen eine dünne Schicht eines Li₂O-haltigen Glases, beispielsweise eines Li-Silikat-Glases so aufgeschmolzen, daß die Glasschicht (3a) unter Verwendung eines Edelmetallnetzes, z.B. eines Goldnetzes (4a) elektronisch mit dem Potentialabgriff (2') kurzgeschlossen ist.

Alternativ dazu kann bei der in Fig. 1b gezeigten Ausführungsform der erfindungsgemäßen Zelle anstelle des Glases (3a) eine dünne Schicht eines dichtgesinterten Materials (3b) verwendet werden, das als Kationenleiter, z.B. als Li-, Na- oder K-Ionenleiter bekannt ist. Geeignete Materialien für diesen Zweck sind beispielsweise Nasicon, Na- oder K-beta-Al₂O₃, Lisicon oder ein hochschmelzendes Li-Glas.

Auf beiden Seiten des Kationenleiters wird ein elektronisch leitender Potentialabgriff (4b) angebracht. Dies kann beispielsweise durch Bedampfen der beiden planparallelen Oberflächen mit einer Goldschicht erfolgen. Beide Schichten werden vorzugsweise über den Rand des Sinterkörpers miteinander verbunden, also kurzgeschlossen. Anstelle dieses kurzgeschlossenen Körpers kann auch ein sowohl kationisch als auch elektronisch leitfähiger Kompositkörper (nicht gezeigt) eingesetzt werden.

Der auf diese Weise präparierte Kationen und Elektronen leitende Sinterkörper (3b) wird nachfolgend auf eine mit dem Potentialabgriff (2') versehene platinierte Oberflächen des sauerstoffionenleitenden Festelektrolyten (1) aufgedrückt. Dies kann beispielsweise unter Verwendung eines Tropfens einer Na- bzw. K-Wasserglaslösung (5) erfolgen.

Durch das Aufbringen des Kationen- und Elektronenleiters (3a, 3b) wird die mit dem Potentialabgriff (2') versehene Oberfläche des sauerstoffionenleitenden Festelektrolyten bzw. ein potentialabstimmender Bereich davon gasdicht gegenüber der Umgebung versiegelt.

Auf den Leiter (3a, 3b), der eine Leitfähigkeit für Ionen des Metalls Me und für Elektronen aufweist, wird nachfolgend eine dünne Schicht eines gassensitiven Salzes Meₘ(XOₙ)ₚ (6) aufgebracht. Dies kann beispielsweise durch Eintrocknen eines Tropfens einer gesättigten wässrigen Salzlösung erfolgen.

Der sauerstoffionenleitende Festelektrolyt wird auf beiden Elektrodenseiten der Meßgasatmosphäre (7), die das zu bestimmende Gas XOₓ und O₂ enthält, ausgesetzt. Das Signal wird von den platinierten Oberflächen des sauerstoffionenleitenden Festelektrolyten abgegriffen.

Neben dem vorstehend beschriebenen Ausführungsbeispiel lassen sich natürlich noch andere Sensorvarianten realisieren. So kann beispielsweise zur Messung von CO₂ auch die Verwendung der Materialkombination Cs₂CO₃/Cs-Ionenleiter und Rb₂CO₃/Rb-Ionenleiter verwendet werden. Zur Messung von SOₓ kann beispielsweise die Kombination von Me₂SO₄/Me-Ionenleiter (Me=Rb, Cs) und MeSO₄/Me-Ionenleiter (Me=Ca, Sr, Ba) verwendet werden. Zur Messung von NOₓ ist beispielsweise die Kombination CsNO₃/Cs-Ionenleiter geeignet.

Anstelle der im Ausführungsbeispiel beschriebenen Kompaktbauweise läßt sich der erfindungsgemäße Sensor auch in der Planartechnik herstellen.

Fig. 2 illustriert anhand der CO₂-Partialdruckabhängigkeit der bei 680 °C gemessenen Zellspannung die Empfindlichkeit eines gemäß Fig. 1 hergestellten CO₂-Sensors auf die Änderung des CO₂-Gehalts im Meßgas.

## Patentansprüche

1. Galvanische Zelle, umfassend
(a) einen sauerstoffionenleitenden Festelektrolyten (1),
(b) ein gassensitives Material (6), das mindestens ein Salz der Strukturformel Meₘ(XOₙ)ₚ enthält, worin Me ein Metall darstellt, X C, S oder N bedeutet und die Symbole m, n und p die jeweiligen Stöchiometrieverhältnisse charakterisieren, und
(c) zwei elektronisch leitende Potentialabgriffe (2, 2') an Oberflächenbereichen des sauerstoffionen-leitenden Festelektrolyten (1),
(d) **gekennzeichnet durch** ein zwischen dem sauerstoffionenleitenden Festelektrolyten (1) und dem gassensitiven Material (6) angeordnetes Material (3a, b), welches für Kationen des Metalls Me und für Elektronen leitfähig ist und die mit dem einen Potentialabgriff (2') versehene Oberfläche des Festelektrolyten (1) gasdicht versiegelt.

2. Galvanische Zelle nach Anspruch 1,
**dadurch gekennzeichnet,**
**daß** sich das kationenleitende Material (3a, b) unter den Betriebsbedingungen der Zelle chemisch inert gegenüber dem gassensitiven Material (6) und dem Festelektrolyten (1) verhält.

3. Galvanische Zelle nach Anspruch 1 oder 2,
**dadurch gekennzeichnet,**
**daß** das kationenleitende Material (3a, b) eine Löslichkeit für das dem Kation Me entsprechende Oxid Me_{y}O aufweist.

4. Galvanische Zelle nach einem der Ansprüche 1 - 3,
**dadurch gekennzeichnet,**
**daß** das kationenleitende Material (3a, b) eine vernachlässigbar geringe Beweglichkeit für Sauerstoff oder/und das Oxid Me_{y}O aufweist.

5. Galvanische Zelle nach einem der Ansprüche 1 - 4,
**dadurch gekennzeichnet,**
**daß** das für Metallionen und Elektronen leitfähige Material (3a, b) ein Kompositmaterial umfaßt, das ein Gemisch aus einer elektronisch leitenden Phase und einer kationenleitenden Phase enthält.

6. Galvanische Zelle nach einem der vorgehenden Ansprüche,
**dadurch gekennzeichnet,**
**daß** das für Metallionen und Elektronen leitfähige Material (3a, b) einen elektronisch kurzgeschlossenen Kationenleiter umfaßt.

7. Galvanische Zelle nach einem der vorhergehenden Ansprüche,
**dadurch gekennzeichnet,**
**daß** das kationenleitende Material (3a, b) ein Alkalimetalloder Erdalkalimetallionenleiter ist.

8. Galvanische Zelle nach einem der vorhergehenden Ansprüche,
**dadurch gekennzeichnet,**
**daß** der sauerstoffionenleitende Festelektrolyt (1) ein Material auf der Basis von ZrO₂, ThO₂, CeO₂, HfO₂ oder Bi₂O₃ ist.

9. Galvanische Zelle nach einem der vorhergehenden Ansprüche,
**dadurch gekennzeichnet,**
**daß** das gassensitive Material (6) ein Alkalimetall- oder Erdalkalimetallsalz enthält.

10. Galvanische Zelle nach einem der vorhergehenden Ansprüche,
**dadurch gekennzeichnet,**
**daß** das Salz ein Carbonat, Nitrat oder Sulfat ist.

11. Verwendung einer galvanischen Zelle nach einem der Ansprüche 1 - 10 als Gassensor zur Messung von Kohlendioxid, Schwefeloxiden und Stickoxiden.

## Claims

1. Galvanic cell comprising
(a) an oxygen-ion-conducting solid electrolyte (1),
(b) a gas-sensitive material (6) which contains at least one salt of the structural formula Meₘ(XOₙ)ₚ in which Me represents a metal, X denotes C, S or N and the symbols m, n and p characterize the respective stoichiometric ratios and
(c) two electronically-conductive potential taps (2, 2') on surface areas of the oxygen-ion-conducting solid electrolye (1),
(d) **characterized by** a material (3a, b) arranged between the oxygen-ion-conducting solid electrolyte (1) and the gas-sensitive material (6) which can conduct cations of the metal Me and electrons, and which seals the surface of the solid electrolyte (1) that is provided with the one potential tap (2') in a gas-tight manner.

2. Galvanic cell as claimed in claim 1,
**characterized in that**
the cation-conducting material (3a, b) is chemically inert towards the gas-sensitive material (6) and the solid electrolyte (1) under the operating conditions of the cell.

3. Galvanic cell as claimed in claim 1 or 2,
**characterized in that**
the cation-conducting material (3a, b) is soluble for the oxide Me_{y}O of the cation Me.

4. Galvanic cell as claimed in one of the claims 1 - 3,
**characterized in that**
the mobility of oxygen or/and the oxide Me_{y}O is negligible in the cation-conducting material (3a, b).

5. Galvanic cell as claimed in one of the claims 1 - 4,
**characterized in that**
the material (3a, b) which can conduct metal ions and electrons comprises a composite material which contains a mixture of an electronically conductive phase and a cation-conducting phase.

6. Galvanic cell as claimed in one of the previous claims,
**characterized in that**
the material (3a, b) that can conduct metal ions and electrons comprises an electronically short-circuited cation conductor.

7. Galvanic cell as claimed in one of the previous claims,
**characterized in that**
the cation-conducting material (3a, b) is an alkali metal ion or alkaline earth metal ion conductor.

8. Galvanic cell as claimed in one of the previous claims,
**characterized in that**
the oxygen-ion-conducting solid electrolyte (1) is a material based on ZrO₂, ThO₂, CeO₂, HfO₂ or Bi₂O₃.

9. Galvanic cell as claimed in one of the previous claims,
**characterized in that**
the gas-sensitive material (6) contains a salt of an alkali metal or alkaline earth metal.

10. Galvanic cell as claimed in one of the previous claims,
**characterized in that**
the salt is a carbonate, nitrate or sulphate.

11. Use of a galvanic cell as claimed in one of the claims 1 - 10 as a gas sensor for measuring carbon dioxide, sulphur oxides and nitrogen oxides.

## Revendications

1. Cellule galvanique comprenant :
(a) un électrolyte solide conducteur d'ions d'oxygène (1),
(b) un matériau sensible au gaz (6), contenant au moins un sel de formule structurelle Meₘ (XOₙ)ₚ, dans laquelle Me représente à un métal, X signifie C, S ou N et les symboles m, n et p caractérisent les rapports de stoechiométrie, et
(c) deux prises de potentiel conductrices d'électrons (2, 2') situées à la surface de l'électrolyte solide conducteur d'ions d'oxygène (1),
(d) **caractérisée par** un matériau (3a, b) placé entre l'électrolyte solide conducteur d'ions d'oxygène (1) et le matériau sensible au gaz (6), ledit matériau étant conducteur des cations du métal Me et des électrons et étant propre à rendre étanche au gaz la surface de l'électrolyte solide (1) qui est pourvue d'une prise de potentiel (2').

2. Cellule galvanique selon la revendication 1,
**caractérisée en ce que,** dans les conditions de fonctionnement de la cellule,
le matériau conducteur de cations (3a, b) reste inerte chimiquement par rapport au matériau sensible au gaz (6) et à l'électrolyte solide (1).

3. Cellule galvanique selon la revendication 1 ou la revendication 2,
**caractérisée en ce que**
le matériau conducteur de cations (3a, b) possède une solubilité pour l'oxyde Me_{y}O correspondant au cation Me.

4. Cellule galvanique selon l'une quelconque des revendications 1 à 3,
**caractérisée en ce que**
le matériau conducteur de cations (3a, b) possède une mobilité faible négligeable pour l'oxygène ou/ et l'oxyde Me_{y}O.

5. Cellule galvanique selon l'une quelconque des revendications 1 à 4,
**caractérisée en ce que**
le matériau conducteur d'ions métalliques et d'électrons (3a, b) comprend un matériau composite contenant un mélange à base d'une phase conductrice d'électrons et d'une phase conductrice de cations.

6. Cellule galvanique selon l'une quelconque des revendications précédentes,
**caractérisée en ce que**
le matériau conducteur d'ions métalliques et d'électrons (3a, b) comprend un conducteur cationique en court-circuit d'électrons.

7. Cellule galvanique selon l'une quelconque des revendications précédentes,
**caractérisée en ce que**
le matériau conducteur de cations (3a, b) est un conducteur en métal alcalin ou en métal alcalino-terreux.

8. Cellule galvanique selon l'une quelconque des revendications précédentes,
**caractérisée en ce que**
l'électrolyte solide conducteur d'ions d'oxygène (1) est un matériau à base de ZrO₂, ThO₂, CeO₂, HfO₂ ou Bi₂O₃.

9. Cellule galvanique selon l'une quelconque des revendications précédentes,
**caractérisée en ce que**
le matériau sensible au gaz (6) contient un sel de métal alcalin ou de métal alcalino-terreux.

10. Cellule galvanique selon l'une quelconque des revendications précédentes,
**caractérisée en ce que**
le sel est un carbonate, un nitrate ou un sulfate.

11. Utilisation d'une cellule galvanique selon l'une quelconque des revendications 1 à 10 comme détecteur de gaz pour mesurer le dioxyde de carbone, les oxydes de soufre et les oxydes d'azote.
